# EUROPEAN PATENT SPECIFICATION

(11) **EP 2 500 681 B1**
(45) Date of publication and mention of the grant of the patent: **12.09.2018**
(21) Application number: 10829814.2
(22) Date of filing: 20.10.2010
(51) Int. Cl.: F28F 3/08, F28F 21/06, F28D 9/00, F28D 21/00

(54) **TOTAL HEAT EXCHANGER AND METHOD FOR PRODUCING PARTITION PLATE USED IN SAME**
GESAMTWÄRMETAUSCHER UND HERSTELLUNGSVERFAHREN FÜR EINE DARIN VERWENDETE PARTITIONSPLATTE
ÉCHANGEUR DE CHALEUR TOTALE ET PROCÉDÉ DE PRODUCTION DE CLOISON DE SÉPARATION L'UTILISANT

(30) Priority: 11.11.2009 JP 2009258131
(43) Date of publication of application: 19.09.2012
(73) Proprietor: Mitsubishi Electric Corporation, Tokyo 100-8310 (JP)
(72) Inventor: TERAI, Mamoru, Tokyo 100-8310 (JP); TOKIZAKI, Shinya, Tokyo 100-8310 (JP); TAKADA, Masaru, Tokyo 100-8310 (JP); SOTOKAWA, Hajime, Tokyo 100-8310 (JP); ISHIMARU, Yuichi, Tokyo 100-8310 (JP)
(74) Representative: Pfenning, Meinig & Partner mbB
(86) International application number: PCT/JP2010/068480
(87) International publication number: WO 2011/058854

(56) References cited:
- JP-A- 8 219 676
- JP-A- H08 219 676
- JP-A- 2007 285 598
- US-A- 4 484 938

## Description

### TECHNICAL FIELD

The present invention relates to total heat exchangers used in, for example, ventilators and the like which supply the outside air into a room and exhaust the air in the room to the outside of the room at the same time and methods for producing partition plates used in same.

### BACKGROUND ART

One of the ventilation methods that can be used without decreasing the cooling and heating efficiency of a room is ventilating while heat exchanging between a supply air flow and an exhaust air flow. It is effective to exchange humidity (latent heat) as well as temperature (sensible heat) between the supply air flow and the exhaust air flow (namely, to conduct total heat exchange) at the same time so as to improve the heat exchange efficiency.

As the use of total heat exchangers is spreading, there is a need for increasing the moisture resistance of a partition plate material so that total heat exchangers can be introduced into environments in which condensation tends to occur due to large differences between the temperatures of the supply air flow and the exhaust air flow, such as cold climates, bathrooms, heated pools, etc.

Conventionally, a total heat exchanger which conducts total heat exchange between the supply air flow and the exhaust air flow across a partition plate of a porous polymer sheet impregnated or coated with a hygroscopic material has been proposed. As the hygroscopic material, a hydrophilic polymer or the like containing a moisture absorbent is used (for example, see Patent Document 1). In addition, a total heat exchanger for conducting total heat exchange between the supply air flow and the exhaust air flow across a partition plate having a structure in which a porous resin film composed of polytetrafluoroethylene (PTFE) is sandwiched between a porous resin base material such as a nonwoven fabric and a hydrophilic moisture-permeable resin film has been proposed (for example, see Patent Documents 2 and 3).

Further, a fabric having a structure in which a microporous resin film composed of a polyurethane-based resin such as fluorine-containing polyurethane is sandwiched between nonporous water-swellable polyurethane and a fibrous base material such as a nonwoven fabric has been proposed (for example, see Patent Document 4), although it is not a partition plate for total heat exchangers. This document describes a wet coagulation process comprising coating a polyurethane-based resin solution on a fibrous base material, immersing it in water to coagulate the polyurethane-based resin, washing it for removing a solvent, and drying it as a method for forming the microporous resin film.

Other than the above, a leather-like sheet comprising a fibrous base material impregnated with polyurethane having laminated thereon a porous polyurethane layer and a crosslinked nonporous layer has been proposed (for example, see Patent Document 5), although it is not a partition plate for total heat exchangers. In addition to the wet coagulation process, this document describes a dry foaming process comprising blending a foaming agent in a resin and a machine foaming process comprising mixing a resin such that the resin holds air as the method for forming the porous polyurethane layer.

Further, a leather-like sheet prepared by forming a nonporous coating layer on a sheet which comprises a base material and a porous coating layer and adding mechanical deformation to this nonporous coating layer to form fine cracks on the surface thereof has been proposed (for example, see Patent Document 6), although it is not a partition plate for total heat exchangers.

### PRIOR ART REFERENCES

### PATENT DOCUMENTS

Patent Document 1: JP 60-205193 A
Patent Document 2: JP 2007-285598 A
Patent Document 3: JP 7-133994 A
Patent Document 4: JP 7-009631 A
Patent Document 5: JP 2004-211262 A
Patent Document 6: JP 51-045643 B

JPH08219676A discloses a partition plate of a heat-exchanger formation of a heat- exchanger is such that a partition plate of the heat-exchanger has a porous material on the surface of which is coated with an adhesion layer, a distance plate by which a flow passage is formed between the partition plates and is coated with a film having air shielding ability, by applying heat on the adhesion layer, the adhesion layer is softened to provide an adhesion, contact parts between the partition plates; and the distance plate are rapidly and continuosuly bonded to form a unit member, and by applying an adhesive on the top parts of the distance plate of the unit member, the unit members are coupled together, and the given number of the unit members is laminated.

### SUMMARY OF THE INVENTION

### PROBLEMS TO BE SOLVED BY THE INVENTION

However, according to the total heat exchanger described in Patent Document 1, as the moisture absorbent holding power of the hydrophilic polymer is weak, a large amount of the moisture absorbent is washed away by the condensation that occurs on the surface of the partition plate, so it is difficult to maintain the moisture permeability of the partition plate for a long period of time. Therefore, in the case of using the total heat exchanger described in Patent Document 1 for a long period of time, there is a problem of reduction in performance of the total heat exchanger.

Reduction in moisture permeability due to the moisture absorbent can be prevented by using the total heat exchangers described in Patent Documents 2 and 3. In addition, the hydrophilic moisture-permeable resin film can be formed to be thin by forming the hydrophilic moisture-permeable resin film on a highly flat PTFE film, whereby high moisture permeability can be obtained. However, as a porous PTFE film is produced by the monoaxial or biaxial drawing of a nonporous PTFE film, there is a problem of a complicated production process because a different procedural step for preparing a porous PTFE film is necessary. Further, as a fluororesin per se does not have moisture permeability, the moisture permeability is assured only in the pores of the porous PTFE film. Namely, the fluororesin component is a barrier for the total heat exchanging efficiency. In addition, the fluorine-based resin is expensive and thus is disadvantageous in cost.

As many procedural steps are necessary to prepare the microporous resin film of the fabric described in Patent Document 4, there is a disadvantage in process time. In addition, as it is necessary to consider an increase in environmental load in disposing of waste liquid, the fabric is disadvantageous in cost because the cost for disposal is necessary. Further, as there is a risk of solvent remaining in the microporous resin film, when the fabric described in Patent Document 4 is used as a partition plate of a total heat exchanger, countermeasures against VOC in a supply air flow is necessary. In addition, the fabric described in Patent Document 4 was developed so to achieve performance in resistance to hydraulic pressure and moisture permeability, while its air permeability is from several seconds to about 3000 seconds. When it is used as the partition plate of a total heat exchanger, a supply air flow is mixed with an exhaust air flow across the partition plate and performance in ventilation is reduced.

The porous polyurethane layer of the leather-like sheet described in Patent Document 5 is formed by a dry foaming process or a machine foaming process as well as a wet coagulation process. As a foaming agent is blended in the dry foaming process, the dry foaming process is disadvantageous in cost. In addition, if a foaming agent is not sufficiently mixed, as areas without pores are partially formed, it may be inconvenient in forming a nonporous layer in the following steps. Further, it is difficult to produce a thin porous polyurethane layer by the dry foaming process. It is also difficult to produce a thin porous polyurethane layer by the machine foaming process because the machine foaming process needs to stably incorporate air into the layer. If the sheet described in Patent Document 5 is used as a partition plate of a total heat exchanger, as the thickness of the porous polyurethane layer is 50 to 400 µm, the moisture permeability is significantly low and performance of the total heat exchanger is reduced.

The surface layer of the leather-like sheet described in Patent Document 6 is produced by a procedure for adding mechanical deformation to the surface to form fine cracks thereon. However, as the mechanical deformation is added by kneading the material by hand so as to add deformation such as elongation, compression, and the like, it is difficult to stably produce fine cracks and it is unsuitable for mass production. Further, as the portion where cracks are generated by this technical means is the nonporous coating layer which constitutes the uppermost layer of the leather-like sheet, performance in air permeability is reduced. If the sheet described in Patent Document 6 is used as a partition plate of a total heat exchanger, the supply air flow is mixed with the exhaust air flow across the partition plate in the total heat exchanger and performance in ventilation is reduced.

Therefore, the present invention was made to solve the above problems. The object of the present invention is to provide a total heat exchanger which can prevent reduction in performance in an environment of repeated condensation and has a high total heat exchange efficiency.

### MEANS FOR SOLVING THE PROBLEMS

The inventors of the present application keenly studied to develop a total heat exchanger which can solve the conventional problems as above and as a result found that a partition plate obtained by forming a fissured layer having a specific thickness and composed of a hydrophilic moisture-permeable resin while utilizing the surface irregularities of a porous resin base material and further forming a thin film, without pinholes, of a nonporous hydrophilic moisture-permeable resin film layer having high moisture permeability and a specific thickness on the fissured layer wherein the surface irregularities of the porous resin base material are made flat and smooth with the fissured layer, is useful for solving these problems to complete the present invention.

Namely, the total heat exchanger of the present invention is a total heat exchanger according to the subject-matter of independent claim 1.

### EFFECT OF THE INVENTION

According to the present invention, a total heat exchanger which can prevent reduction in performance even in an environment of repeated condensation and has a high total heat exchange efficiency can be provided.

### BRIEF DESCRIPTION OF THE DRAWINGS

[Fig. 1] depicts a perspective view of a total heat exchanger according to embodiment 1.
[Fig. 2] depicts a diagram of an example of a method for producing a partition plate.
[Fig. 3] depicts a diagram of an example of a method for producing a partition plate.
[Fig. 4] depicts a diagram of an example of a method for producing a partition plate.

### MODE FOR CARRYING OUT THE INVENTION

The embodiments of the present invention will be explained below with reference to the drawings.

### Embodiment 1

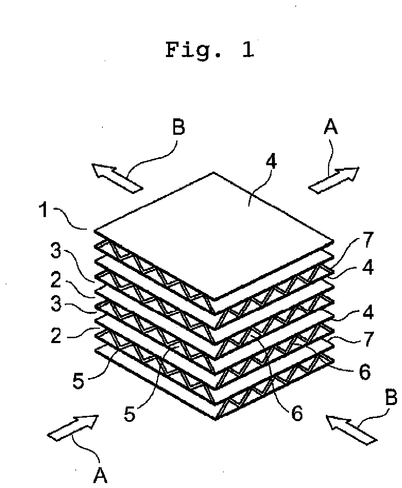

Fig. 1 is a perspective view showing a total heat exchanger according to Embodiment 1. In Fig. 1, a total heat exchanger 1 is a laminate body prepared by alternately laminating supply air flow layers 2 through which a supply air flow flows and exhaust air flow layers 3 through which an exhaust air flow flows via partition plates 4. The supply air flow layers 2 are provided with supply air flow passages 5 which guide the supply air flow along the partition plates 4. The exhaust air flow layers 3 are provided with exhaust air flow passages 6 which guide the exhaust air flow along the partition plates 4. The supply air flow passages 5 and the exhaust air flow passages 6 are formed by corrugated spacing plates 7 that keep a predetermined distance between the partition plates 4. The direction A to which the supply air flow is guided by the supply air flow passage 5 and the direction B to which the exhaust air flow is guided by the exhaust air flow passage 6 are orthogonal to each other.

The partition plates 4 which mainly function to conduct heat exchange have vapor-permeable and air-impermeable (moisture-permeable) properties and ventilation (gas-barrier) properties by separating the supply air flow from the exhaust air flow and realize a high total heat exchange efficiency. Each partition plate 4 is characterized by having a three-layered structure having a porous resin base material layer, a fissured layer composed of a hydrophilic moisture-permeable resin, and a nonporous hydrophilic moisture-permeable resin film layer laminated in this order. Utilizing the surface irregularities of the porous resin base material layer, the fissured layer composed of the hydrophilic moisture-permeable resin is formed. Further, by utilizing the fact that the surface irregularities of the porous resin base material layer can be made flat and smooth with the fissured layer, a highly moisture-permeable nonporous hydrophilic moisture-permeable resin film layer is formed on the fissured layer.

For example, a nonwoven fabric, a woven fabric, a knit fabric, or the like may be used as the porous resin base material layer. Considering cost, a nonwoven fabric is preferably used. The material of the nonwoven fabric is not particularly limited. For example, a typical nonwoven fabric is composed of polyester fibers. The basis weight of the nonwoven fabric is 5 g/m² or more and 100 g/m² or less, preferably 10 g/m² or more and 30 g/m² or less, more preferably 15 g/m². The thickness of the nonwoven fabric is 2 µm or more and 500 µm or less, preferably 10 µm or more and 200 µm or less, more preferably 100 µm or more and 150 µm or less. The air permeability of the nonwoven fabric is preferably one second or less (the measuring limit or less) . The air permeability in the present invention is a value determined in accordance with JIS P 8117. More specifically, the time (seconds) required for 100 cm³ of air to pass through a part of a film area of 645 mm² is measured and this is considered to be air permeability. If the basis weight is less than 5 g/m² or less or the thickness is less than 2 µm, there may be a case where sufficient strength of the partition plate cannot be obtained. If the basis weight is 100 g/m² or more or the thickness is 500 µm or more, it may interfere with the function to conduct heat exchange of temperature and humidity and it is not preferable. In addition, if the air permeability is more than one second, it may interfere with the function to conduct heat exchange of temperature and humidity and it is not preferable.

As the space between resin fibers of the nonwoven fabric can be coarse and large in the air-permeable porous resin base material layer composed of a nonwoven fabric, it does not interfere with the function of the hydrophilic moisture-permeable resin film which plays a role in keeping the strength of the partition plate 4, has gas barrier properties, and functions to conduct heat exchange of temperature and humidity. In addition, as the air-permeable porous resin base material layer composed of a nonwoven fabric is water-insoluble, degradation thereof by condensed water is prevented in an environment of repeated condensation and it can maintain basic performance of the partition plate 4 such as moisture-permeability, gas barrier properties, and water repellent properties.

A nonwoven fabric produced by, for example, spunbonding, meltblowing, thermal bonding, chemical bonding, needle punching, spunlacing, steam jet bonding, or the like may be used as the nonwoven fabric preferably used as the porous base material. In addition, aramid fibers, glass fibers, cellulose fibers, nylon fibers, vinylon fibers, polyester fibers, polyolefin fibers, rayon fibers, and the like may be used as materials. In particular, a nonwoven fabric prepared by spunbonding, melt blowing, thermal bonding, or steam jet bonding which ensures the strength, durability, and air permeability using a small amount of fibers combined with nylon fibers, vinylon fibers, or polyester fibers which have durability and cost advantages is more preferable. Among them, a spunbonded nonwoven fabric using polyester fibers is the most preferable because a wide range of temperatures is allowed in forming the fissured layer composed of the hydrophilic moister-permeable resin and the nonporous hydrophilic moisture-permeable resin film layer and it has excellent size stability.

The resin constituting the fissured layer is not particularly limited so long as it has high moisture permeability. For example, an ether-based polyurethane-based resin, an ester-based polyurethane-based resin, or a polyester-based resin is used. Preferably, an ether-based polyurethane-based resin having a high hydrolysis resistance, a long life as the partition plate 4, and high moisture permeability is used. The above polyurethane-based resin is either a "thermally-cured" type resin used in the form of a thermally-cured type resin composed of monomers such as diols containing organic diisocyanate and oxyethylene group, composed of at least one type of monomer such as diols containing organic diisocyanate and oxyethylene group and at least one type of urethane prepolymer, or composed of monomers such as diols containing organic diisocyanate and oxyethylene group, at least one type of urethane prepolymer, and a polyurethane, which is thermally cured to be formed into the fissured layer or a "dried by heating" type resin used in the form of an aqueous solution, a dimethylformamide solution, a methyl ethyl ketone solution, a toluene solution, or the like of an urethanized resin, which is dried by heating to be formed into the fissured layer. Other publically known additives may be further formulated in these polyurethane resins as long as the effect of the present invention is not reduced. Examples of the additives include chain extenders, flame retardants, thermal stabilizers, antioxidants, ultraviolet absorbers, plasticizers, crystal nucleating agents, foaming agents, antibacterial and antifungal agents, fillers, reinforcing agents, conductive fillers, antistatic agents, and the like. The amount of the additive formulated in the resin used in the present invention may be optionally selected, depending on the material used. These polyurethane-based resins preferably have an oxyethylene group content of 10 wt% or more and 80 wt% or less.

Regarding the fissured layer composed of the hydrophilic moisture-permeable resin, in order to reduce tackiness of the resin film to increase workability, fine particles having an average particle size of 0.5 µm or more and 100 µm or less may be added to the above resin. These fine particles are fixed to the inside of the resin film and/or the resin film surface. The shape of the fine particles is not particularly limited. Examples thereof include scale, needle, rod, and amorphous shapes.

The fissured layer composed of the hydrophilic moisture-permeable resin is formed as a porous film having pinholes, utilizing the surface irregularities of the porous resin base material layer (for example, a nonwoven fabric) . The porous state in the present invention means a state having air permeability of less than 5000 seconds, preferably 1000 seconds or less, more preferably 200 seconds or less. It is necessary that the thickness of the fissured layer is 2 µm or more and 50 µm or less, preferably 4 µm or more and 20 µm or less. If the fissured layer is too thin, pinholes that cannot be filled by the treatment described below are formed in the nonporous hydrophilic moisture-permeable resin film described below, partial peeling between the porous resin base material layer and the fissured layer occurs, and the effect to reduce resistance to movement of water molecules in the film due to water-retaining properties of the resin is reduced. On the other hand, if it is too thick, the pore level is not sufficient and the total heat exchange efficiency is reduced.

The fissured layer composed of the hydrophilic moisture-permeable resin can be formed on the porous resin base material layer (for example, a nonwoven fabric) by a publicly known film forming method. Examples of the film forming method includes a method comprising coating a solution of a resin dissolved in an organic solvent or water or a solvent-free resin melt heated to a softening point or higher directly on a porous resin base material layer (a nonwoven fabric) using a gravure coater, a kiss coater, a roll knife coater, a comma coater, a rod coater, a reverse roll coater, or the like; a lamination method comprising coating it on a release base material such as a release film or release paper and bonding the coating film to a porous resin base material layer; a method using a flat die such as a T die or a coat hanger die; and an inflation method from a circular die, or the like. The release film includes polyolefin-based films such as polypropylene and polyethylene, polyester-based films, and the like.

The surface of the porous resin base material layer having large surface irregularities (for example, a nonwoven fabric) is made flat and smooth with the fissured layer composed of the hydrophilic moisture-permeable resin, whereby the nonporous hydrophilic moisture-permeable resin film having high moisture permeability described below can be formed on the fissured layer. In addition, as described above, the hydrophilic moisture-permeable resin film is made porous by production of cracks, the moisture permeability can be assured both in pores and resin portions, and thus excellent moisture permeability can be achieved.

The resin constituting the nonporous hydrophilic moisture-permeable resin film layer is not particularly limited so long as the resin is highly hydrophilic. For example, resins having a hydrophilic group such as a hydroxyl group, carboxyl group, sulfonic acid group, amino group, and the like may be used. Examples of these resins include hydrophilic polymers such as polyvinyl alcohol at least partially crosslinked, cellulose acetate, and cellulose nitrate, polyamino acids, polyurethane, and the like. Considering the heat resistance, chemical resistance, and workability, an ether-based polyurethane-based resin, an ester-based polyurethane-based resin, a polyester-based resin, or the like is preferable. An ether-based polyurethane-based resin having high hydrolysis resistance, a long life as the partition plate 4, and high moisture permeability is more preferable. The above polyurethane-based resin is either a "thermally-cured" type resin used in the form of a thermally-cured type resin composed of monomers such as diols containing organic diisocyanate and oxyethylene group, composed of at least one type of monomer such as diols containing organic diisocyanate and an oxyethylene group and at least one type of urethane prepolymer, or composed of monomers such as diols containing organic diisocyanate and oxyethylene group, at least one type of urethane prepolymer, and a polyurethane, which is thermally cured to be formed into the nonporous hydrophilic moisture-permeable resin film layer or a "dried by heating" type resin used in the form of an aqueous solution, a dimethylformamide solution, a methyl ethyl ketone solution, a toluene solution, or the like of an urethanized resin, which is dried by heating to be formed into the nonporous hydrophilic moisture-permeable resin film layer. Other publically known additives may be formulated in these polyurethane resins as long as the effect of the present invention is not reduced. Examples of the additives include chain extenders, flame retardants, thermal stabilizers, antioxidants, ultraviolet absorbers, plasticizers, crystal nucleating agents, foaming agents, antibacterial and antifungal agents, fillers, reinforcing agents, conductive fillers, antistatic agents, and the like. The amount of the additive formulated in the resin used in the present invention may be optionally selected, depending on the material used. These polyurethane-based resins preferably have an oxyethylene group content of 10 wt% or more and 80 wt% or less.

In addition, the resin constituting the nonporous hydrophilic moisture-permeable resin film layer may be the same as or different from that of the fissured layer composed of the hydrophilic moisture-permeable resin. If the same resin is used, workload in process-control is reduced because only the control of one kind of resin is necessary. Further, reduction in cost of materials is possible. In addition, an effect to increase adhesion strength between the fissured layer and the nonporous hydrophilic moisture-permeable resin film layer and an effect not to produce resistance to moisture permeability on the interface between the fissured layer and the nonporous hydrophilic moisture-permeable resin film layer can be obtained by using the same resin. When different resins are used, it is preferable to prevent mixing of the layers in forming the fissured layer on the nonporous hydrophilic moisture-permeable resin film layer, considering the softening points and solvent solubility of the resins.

Regarding the nonporous hydrophilic moisture-permeable resin film layer, in order to reduce tackiness of the resin film to increase workability, fine particles having an average particle size of 0.5 µm or more and 100 µm or less may be added to the above resin. These fine particles are fixed to the inside of the resin film and/or the resin film surface. The shape of the fine particles is not particularly limited. Examples thereof include scale, needle, rod, and amorphous shapes.

The nonporous hydrophilic moisture-permeable resin film layer is formed on the fissured layer formed on the porous resin base material layer (for example, a nonwoven fabric). The nonporous state in the present invention means a state having air permeability of 5000 seconds or higher. The same method as the method for forming a film of the fissured layer can be used for the nonporous hydrophilic moisture-permeable resin film layer. It is necessary that the thickness of the nonporous hydrophilic moisture-permeable resin film layer is 0.5 µm or more and 10 µm or less, preferably 2 µm or more and 8 µm or less. If the nonporous hydrophilic moisture-permeable resin film layer is too thin, pinholes are formed and sufficient gas barrier properties cannot be exhibited, while if it is too thick, the total heat exchange efficiency is reduced.

The corrugated spacing plate 7 is not particularly limited and a publicly known plate produced by forming processed paper into that having a corrugated shape can be used. The thickness of the spacing plate 7 is not particularly limited and can be appropriately adjusted within the range of 50 µm or more and 200 µm or less.

Next, the performance of the total heat exchanger 1 will be explained. For example, when cool and dry outside air is provided as a supply air flow through the supply air flow layer 2 and warm and highly humid air in a room is provided as an exhaust air flow through the exhaust air flow layer 3, air flows (two types of air flows) of the supply air flow and the exhaust air flow separated by the partition plate 4 flow. At this time, heat and water vapor pass across the partition plate 4, where heat exchange of sensible heat and latent heat is performed between the supply air flow and the exhaust air flow across each partition plate 4, whereby the supply air flow is heated, humidified, and provided into the room and the exhaust air flow is cooled, dehumidified, and exhausted to the outside of the room.

Next, a method for producing the total heat exchanger 1 will be explained. First, a partition plate 4 which comprises the porous resin base material layer, the fissured layer composed of the hydrophilic moisture-permeable resin, and the nonporous hydrophilic moisture-permeable resin film layer laminated in this order is prepared.

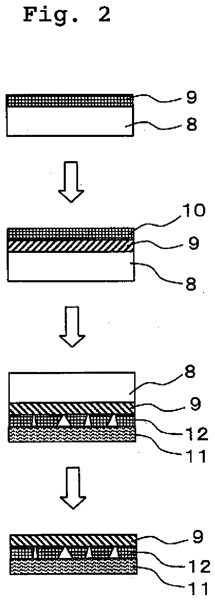

As an example of the method for preparing the partition plate 4, as shown in Fig. 2, a method which comprises coating the hydrophilic moisture-permeable resin solution on a release base material 8 such as a release film or release paper by a publicly known technical means such as knife coater, comma coater, or reverse coater, drying it to form a nonporous hydrophilic moisture-permeable resin film layer 9, then coating the hydrophilic moisture-permeable resin solution on the nonporous hydrophilic moisture-permeable resin film layer 9 to form an undried coating film 10, laminating the undried coating film 10 on a porous resin base material layer 11 by a means such as transferring and drying it to form a fissured layer 12 composed of the hydrophilic moisture-permeable resin, and finally removing the release base material 8 such as a release film or release paper is exemplified. In this method, it is preferable that the softening point of the resin constituting the nonporous hydrophilic moisture-permeable resin film layer 9 is higher than that of the resin constituting the fissured layer 12. In addition, use of a solvent which does not completely melt the nonporous hydrophilic moisture-permeable resin film layer 9 formed on the release base material 8 as a solvent of the hydrophilic moisture-permeable resin solution used in forming the fissured layer 12 is preferable. By this method, the porous resin base material layer 11 moderately mixes with the fissured layer 12 composed of the hydrophilic moisture-permeable resin so that the porous resin base material layer 11 can be strongly bonded to the fissured layer 12 composed of the hydrophilic moisture-permeable resin without using any adhesives. Further, at the time of laminating the undried coating film 10 on the porous resin base material layer 11, cracks (pinholes) are generated in the coating film due to the surface irregularities of the porous resin base material layer 11 and the flat fissured layer 12 spontaneously formed to be porous is formed. The nonporous hydrophilic moisture-permeable resin film layer 9 can be formed to be thin because it is formed on the release base material 8 such as a release film or release paper. It has improved moisture permeability while keeping excellent gas barrier properties. Further, it is preferable that the nonporous hydrophilic moisture-permeable resin film layer 9 is formed to as thin as possible without pores. However, there is a case where fine pinholes are formed, if the thickness of the layer is 2 to 8 µm, for example. When such fine pinholes are formed, according to this production method, these pinholes can be filled at the time of coating the hydrophilic moisture-permeable resin solution for forming the fissured layer 12. The state where such fine pinholes are formed means a state where the formed nonporous hydrophilic moisture-permeable resin film layer 9 has air permeability of 200 seconds or more and 5000 seconds or less.

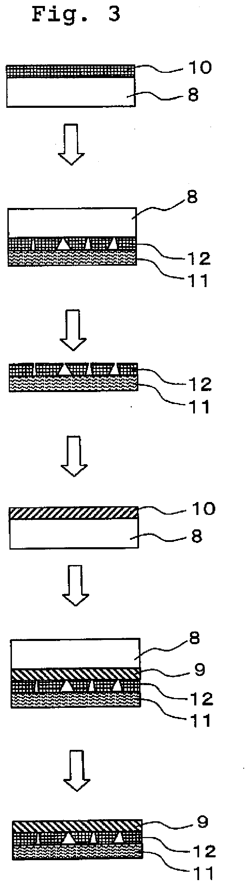

As another example of the method for preparing the partition plate 4, as shown in Fig. 3, a method which comprises coating the hydrophilic moisture-permeable resin solution on the release base material 8 such as a release film or release paper by a publicly known technical means such as knife coater, comma coater, or reverse coater to form an undried coating film 10, laminating the undried coating film 10 on the porous resin base material layer 11 by a means such as transferring and drying it to form the fissured layer 12 composed of the hydrophilic moisture-permeable resin, removing the release base material 8 such as a release film or release paper, then coating the hydrophilic moisture-permeable resin solution on the release base material 8 such as a release film or release paper by a publicly known technical means such as knife coater, comma coater, or reverse coater to form an undried coating film 10, laminating the undried coating film 10 on the fissured layer 12 composed of the hydrophilic moisture-permeable resin and drying it to form the nonporous hydrophilic moisture-permeable resin film layer 9, and finally removing the release base material 8 such as a release film or release paper is exemplified. In this method, it is preferable that the softening point of the resin constituting the fissured layer 12 is higher than that of the resin constituting the nonporous hydrophilic moisture-permeable resin film layer 9. In addition, use of a solvent which does not completely melt the fissured layer 12 as a solvent of the hydrophilic moisture-permeable resin solution used in forming the nonporous hydrophilic moisture-permeable resin film layer 9 is preferable. Also in this method, the porous resin base material layer 11 moderately mixes with the fissured layer 12 composed of the hydrophilic moisture-permeable resin so that the porous resin base material layer 11 can be strongly bonded to the fissured layer 12 composed of the hydrophilic moisture-permeable resin without using any adhesives. Further, at the time of laminating the undried coating film 10 on the porous resin base material layer 11, cracks (pinholes) are generated in the coating film due to the surface irregularities of the porous resin base material layer 11 and a flat fissured layer 12 spontaneously formed to be porous is formed. The nonporous hydrophilic moisture-permeable resin film layer 9 having high moisture permeability can be formed to be thin because the surface irregularities of the porous resin base material layer 11 are made flat and smooth with the fissured layer 12 composed of the hydrophilic moisture-permeable resin. The release base material 8 used in forming the fissured layer 12 composed of the hydrophilic moisture-permeable resin may be the same as or different from that used in forming the nonporous hydrophilic moisture-permeable resin film layer 9.

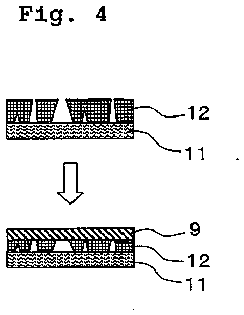

As another example of the method for preparing the partition plate 4, as shown in Fig. 4, a method which comprises coating the hydrophilic moisture-permeable resin solution on the release base material 8 such as a release film or release paper by a publicly known technical means such as knife coater, comma coater, or reverse coater to form an uridried coating film, laminating the undried coating film 10 on the porous resin base material layer 11 by a means such as transferring and drying it to form a fissured layer 12 composed of the hydrophilic moisture-permeable resin, then removing the release base material 8 such as a release film or release paper, and then subjecting the surface of the fissured layer 12 composed of the hydrophilic moisture-permeable resin to heat treatment at a temperature of a softening point of the hydrophilic moisture-permeable resin or higher to melt the hydrophilic moisture-permeable resin and close (or seal) the cracks (or pinholes) to form the nonporous hydrophilic moisture-permeable resin film layer 9 is exemplified. Also in this method, the porous resin base material layer 11 moderately mixes with the fissured layer 12 composed of the hydrophilic moisture-permeable resin so that the porous resin base material layer 11 can be strongly bonded to the fissured layer 12 composed of the hydrophilic moisture-permeable resin without using any adhesives. In addition, at the time of laminating the undried coating film 10 on the porous resin base material layer 11, cracks (or pinholes) are generated in the coating film due to the surface irregularities of the porous resin base material layer 11 and a flat fissured layer 12 spontaneously formed to be porous is formed. In this case, the kind of resin constituting the nonporous hydrophilic moisture-permeable resin film layer 9 is the same as that of the fissured layer 12 composed of the hydrophilic moisture-permeable resin. The resins used for the nonporous hydrophilic moisture-permeable resin film layer 9 and the fissured layer 12 composed of the hydrophilic moisture-permeable resin are preferably thermoplastic hydrophilic polyurethane resins. In this method, as it is not necessary that the relation of solvent solubility and softening point between the fissured layer 12 composed of the hydrophilic moisture-permeable resin and the nonporous hydrophilic moisture-permeable resin film layer 9 is controlled by a lamination method, there is an advantage that a wide range of materials can be used.

The total heat exchanger 1 is obtained by preparing a lamination unit by bonding a partition plate 4 prepared in this manner to a corrugated spacing plate 7 and laminating the desired number of the above lamination units such that the directions of the corrugations of the spacing plates 7 are orthogonal to each other.

As the total heat exchanger 1 according to Embodiment 1 uses the partition plates 4 having a three-layered structure of the porous resin base material layer 11, the fissured layer 12 composed of the hydrophilic moisture-permeable resin, and the nonporous hydrophilic moisture-permeable resin film layer 9 laminated in this order and do not contain a moisture absorber, reduction in performance in moisture-permeability due to escaped absorber does not occur. In addition, as the fissured layer 12 composed of the hydrophilic moisture-permeable resin is formed, utilizing the surface irregularities of the porous resin base material layer 11, it is not necessary for a porous film to be prepared in a separate step and not only the pores but also the resin portions have moisture permeability, whereby the moisture permeability can be improved. Further, as the surface irregularities of the porous resin base material layer 11 are made flat and smooth with the fissured layer 12 composed of the hydrophilic moisture-permeable resin, the highly moisture-permeable nonporous hydrophilic moisture-permeable resin film layer 9 can be formed into a thin film without pinholes, whereby gas barrier properties can be also improved. Therefore, the total heat exchange efficiency can be improved and reductions in performance under environments of repeated condensation can be prevented. In addition, as use of a fluorine-based material as the resin material constituting the partition plate 4 is not necessary, reduction in cost can be realized.

### EXAMPLES

The present invention will be further explained in detail below with reference to examples. However, it is not limited to these examples.

### <Example 1>

A methyl ethyl ketone (MEK) solution of an ether-based polyurethane resin having an oxyethylene group content of 50 wt% and a softening point after film formation of 220°C was coated on a release film by a comma coater and was dried by heating to form a nonporous hydrophilic moisture-permeable resin film layer having a thickness of about 10 µm. The formed nonporous hydrophilic moisture-permeable resin film layer became insoluble in MEK. Next, a methyl ethyl ketone solution of an ether-based polyurethane resin having an oxyethylene group content of 40 wt% and a softening point of 200°C was coated on the nonporous hydrophilic moisture-permeable resin film layer formed on the release film by the comma coater and the coating film thereof was transferred onto a nonwoven fabric having a basis weight of 20 g/m², a thickness of 0.14 mm, and air permeability of one second or less (measurement limit or less) by a heated roller before the solvent of the resin solution was completely distilled away and a complete film (at an undried state) was formed to prepare a partition plate having a constitution of nonwoven fabric layer/fissured layer composed of the hydrophilic moisture-permeable resin/nonporous hydrophilic moisture-permeable resin film layer. The thickness of the fissured layer composed of the hydrophilic moisture-permeable resin in the obtained partition plate was about 10 µm.

The obtained partition plate was bonded to a spacing plate prepared by working a treated paper having a thickness of 100 to 200 µm into a corrugated plate to prepare a lamination unit. After the lamination unit was molded such that the shape of the partition plate was a 30 cm square, a plurality of lamination units were laminated such that the directions of the corrugations of the spacing plates were orthogonal to each other, as shown in Fig. 1 to prepare a total heat exchanger having a height of 50 cm.

### <Example 2>

A dimethylformamide (DMF) solution of an ether-based polyurethane resin having an oxyethylene group content of 45 wt% and a softening point of 220°C was coated on a release film by a comma coater. The coating film thereof was transferred onto a nonwoven fabric having a basis weight of 20 g/m², a thickness of 0.14 mm, and air permeability of one second or less (measurement limit or less) by a heated roller before the solvent of the resin solution was completely distilled away and a complete film (at an undried state) was formed to form a fissured layer having a thickness of about 10 µm and composed of the hydrophilic moisture-permeable resin. The formed fissured layer became insoluble in MEK. Next, a methyl ethyl ketone solution of an ether-based polyurethane resin having an oxyethylene group content of 50 wt% and a softening point of 200°C was coated on a release film by the comma coater and the coating film thereof was transferred onto the previously formed fissured layer composed of the hydrophilic moisture-permeable resin by the heated roller before the solvent of the resin solution was completely distilled away and a complete film (at an undried state) was formed to prepare a partition plate having a constitution of nonwoven fabric layer/fissured layer composed of the hydrophilic moisture-permeable resin/nonporous hydrophilic moisture-permeable resin film layer. The thickness of the nonporous hydrophilic moisture-permeable resin film layer in the obtained partition plate was about 10 µm. The obtained partition plate was used to prepare a total heat exchanger in the same manner as in Example 1.

### <Example 3>

A methyl ethyl ketone solution of an ether-based polyurethane resin having an oxyethylene group content of 50 wt% and a softening point of 200°C was coated on a release film by a comma coater and the coating film thereof was transferred onto a nonwoven fabric having a basis weight of 20 g/m², a thickness of 0.14 mm, and air permeability of one second or less (measurement limitation or less) by a heated roller before the solvent of the resin solution was completely distilled away and a complete coating film (at an undried state) was formed to form a fissured layer having a thickness of about 20 µm and composed of the hydrophilic moisture-permeable resin. Next, the surface of the fissured layer composed of the hydrophilic moisture-permeable resin was subjected to heat treatment at 220°C which is a temperature higher than the softening point to melt the hydrophilic moisture-permeable resin to prepare a partition plate having a constitution of nonwoven fabric layer/fissured layer composed of the hydrophilic moisture-permeable resin/nonporous hydrophilic moisture-permeable resin film layer. The thicknesses of the fissured layer composed of the hydrophilic moisture-permeable resin and the nonporous hydrophilic moisture-permeable resin film layer in the obtained partition plate were about 10 µm.

### <Comparative example 1>

A partition plate was prepared in the same manner as in Example 1 except that the thickness of the nonporous hydrophilic moisture-permeable resin film layer in Example 1 was changed to about 0.4 µm. Formation of pinholes was recognized in the nonporous hydrophilic moisture-permeable resin film layer of the obtained partition plate.

### <Comparative example 2>

A partition plate was prepared in the same manner as in Example 1 except that the thickness of the nonporous hydrophilic moisture-permeable resin film layer in Example 1 was changed to about 50 µm.

### <Comparative example 3>

A partition plate was prepared in the same manner as in Example 1 except that the thickness of the fissured layer composed of the hydrophilic moisture-permeable resin in Example 1 was changed to about 0.1 µm. Formation of pinholes was recognized in the nonporous hydrophilic moisture-permeable resin film layer of the obtained partition plate. In addition, partial peeling between the fissured layer composed of the hydrophilic moisture-permeable resin and the nonwoven fabric was recognized.

### <Comparative example 4>

A partition plate was prepared in the same manner as in Example 1 except that the thickness of the fissured layer composed of the hydrophilic moisture-permeable resin in Example 1 was changed to about 100 µm.

### <Comparative example 5>

A partition plate was prepared in the same manner as in Example 1 except that a solution of a thermoplastic polyurethane resin having a softening point of 160°C was used in forming the fissured layer composed of the hydrophilic moisture-permeable resin in Example 1 and a solution of a thermoplastic polyurethane resin having a softening point of 110°C was used in forming the nonporous hydrophilic moisture-permeable resin film layer. Formation of pinholes was recognized in the nonporous hydrophilic moisture-permeable resin film layer of the obtained partition plate. In addition, occurrence of mixing between the fissured layer composed of the hydrophilic moisture-permeable resin and the nonporous hydrophilic moisture-permeable resin film layer was recognized.

### <Comparative example 6>

A partition plate was prepared in the same manner as in Example 1 except that a fissured layer composed of a hydrophilic moisture-permeable resin and a nonporous hydrophilic moisture-permeable resin film layer were formed using a solution of a polyurethane resin dissolved in dimethylformamide (DMF) in place of MEK in Example 1. Remelting of the fissured layer composed of the hydrophilic moisture-permeable resin, due to DMF which melted the nonporous hydrophilic moisture-permeable resin film at the time of preparation was observed. Formation of pinholes was recognized in the nonporous hydrophilic moisture-permeable resin film layer of the obtained partition plate. In addition, occurrence of mixing between the fissured layer composed of the hydrophilic moisture-permeable resin and the nonporous hydrophilic moisture-permeable resin film layer was recognized.

### <Comparative example 7>

A partition plate was prepared in the same manner as in Example 2 except that the thickness of the fissured layer composed of the hydrophilic moisture-permeable resin in Example 2 was changed to about 1 µm. Formation of pinholes was recognized in the nonporous hydrophilic moisture-permeable resin film layer of the obtained partition plate.

### <Comparative example 8>

A partition plate was prepared in the same manner as in Example 2 except that the thickness of the fissured layer composed of the hydrophilic moisture-permeable resin in Example 2 was changed to about 100 µm.

### <Comparative example 9>

A partition plate was prepared in the same manner as in Example 2 except that the thickness of the nonporous hydrophilic moisture-permeable resin film layer in Example 2 was changed to about 0.4 µm. Formation of pinholes was recognized in the nonporous hydrophilic moisture-permeable resin film layer of the obtained partition plate.

### <Comparative example 10>

A partition plate was prepared in the same manner as in Example 2 except that the thickness of the nonporous hydrophilic moisture-permeable resin film layer in Example 2 was changed to about 50 µm.

### <Comparative example 11>

A partition plate was prepared in the same manner as in Example 2 except that a solution of a thermoplastic polyurethane resin having a softening point of 110°C was used in forming the fissured layer composed of the hydrophilic moisture-permeable resin in Example 2 and a solution of a thermoplastic polyurethane resin having a softening point of 160°C was used in forming the nonporous hydrophilic moisture-permeable resin film layer. Formation of pinholes was recognized in the nonporous hydrophilic moisture-permeable resin film layer of the obtained partition plate. In addition, occurrence of mixing between the fissured layer composed of the hydrophilic moisture-permeable resin and the nonporous hydrophilic moisture-permeable resin film layer was recognized.

### <Comparative example 12>

A partition plate was prepared in the same manner as in Example 2 except that the fissured layer composed of the hydrophilic moisture-permeable resin and the nonporous hydrophilic moisture-permeable resin film layer were formed using a solution of a polyurethane resin dissolved in dimethylformamide in place of MEK in Example 2. Formation of pinholes was recognized in the fissured layer composed of the hydrophilic moisture-permeable resin of the obtained partition plate. In addition, occurrence of mixing between the fissured layer composed of the hydrophilic moisture-permeable resin and the nonporous hydrophilic moisture-permeable resin film layer was recognized.

### <Comparative example 13>

A methyl ethyl ketone solution of an ether-based polyurethane resin having an oxyethylene group content of 50 wt% and a softening point of 200°C was coated on a release film by a comma coater. The coating film thereof was transferred onto a nonwoven fabric having a basis weight of 20 g/m², a thickness of 0.14 mm, and air permeability of one second or less (measurement limit or less) by a heated roller before the solvent of the resin solution was completely distilled away and a complete film (at an undried state) was formed to form a fissured layer having a thickness of about 10 µm and composed of a hydrophilic moisture-permeable resin. Next, the surface of the fissured layer composed of the hydrophilic moisture-permeable resin was subjected to heat treatment at 220°C which is a temperature higher than the softening point of the ether-based polyurethane resin to melt the hydrophilic moisture-permeable resin to prepare a partition plate having a constitution of nonwoven fabric layer/fissured layer composed of the hydrophilic moisture-permeable resin/nonporous hydrophilic moisture-permeable resin film layer. Formation of pinholes was recognized in the nonporous hydrophilic moisture-permeable resin film layer of the obtained partition plate.

### <Comparative example 14>

A methyl ethyl ketone solution of an ether-based polyurethane resin having an oxyethylene group content of 50 wt% and a softening point of 200°C was coated on a release film by a comma coater. The coating film thereof was transferred onto a nonwoven fabric having a basis weight of 20 g/m², a thickness of 0.14 mm, and air permeability of one second or less (measurement limit or less) by a heated roller before the solvent of the resin solution was completely distilled away and a complete film (at an undried state) was formed to form a fissured layer having a thickness of about 100 µm and composed of a hydrophilic moisture-permeable resin. Next, the surface of the fissured layer composed of the hydrophilic moisture-permeable resin was subjected to heat treatment at 220°C which is a temperature higher than the softening point of the ether-based polyurethane resin to melt the hydrophilic moisture-permeable resin to prepare a partition plate having a constitution of nonwoven fabric layer/fissured layer composed of the hydrophilic moisture-permeable resin/nonporous hydrophilic moisture-permeable resin film layer. The thicknesses of the fissured layer composed of the hydrophilic moisture-permeable resin and the nonporous hydrophilic moisture-permeable resin film layer in the obtained partition plate were about 90 µm and about 10 µm, respectively.

### <Evaluation of the total heat exchangers>

Evaluation on performance of each of the total heat exchangers of Examples 1 to 3 and Comparative examples 1 to 14 will be explained. Evaluation on performance of each total heat exchanger was carried out by determining the gas barrier properties of the partition plate and resistance to condensation relating to the humidity exchange efficiency of the total heat exchanger.

Evaluation of gas barrier properties of the partition plate was carried out by determining the air permeability of the partition plate in accordance with JIS P 8117. Namely, the time (seconds) required for 100 cm³ of air to pass through a 645 mm² area part of the partition plate was measured and the measured time was considered to be air permeability. In addition, determination of the air permeability of the partition plate was performed in five random portions of the partition plate. As a result, if all of the air permeability in the five random portions of the partition plate was 5000 seconds or more, gas barrier properties were determined to be excellent (○). If the air permeability in any one of the five random portions of the partition plate was less than 5000 seconds, gas barrier properties were determined to be poor (×).

The endurance test for condensation of the partition plate was performed by repeating the steps of immersing the partition plate in water and then drying it several times, which simulates the condensation state. Evaluation of the initial gas barrier properties of the partition plate was carried out, based on the measurement results of the air permeability of the partition plate before the endurance test for condensation. Evaluation of gas barrier properties of the partition plate after the endurance test for condensation was carried out, based on the measurement results of the air permeability of the partition plate after the endurance test for condensation.

Evaluation of resistance to condensation relating to the humidity exchange efficiency of the total heat exchanger was carried out by determining the humidity exchange efficiencies of the total heat exchanger before and after the endurance test for condensation in accordance with the double-changer method of JIS B 8628 (total heat exchanger) Appendix 4 and comparing the determination results before and after the endurance test for condensation. Namely, after the humidity exchange efficiency of the total heat exchanger was determined, an endurance test for condensation of the total heat exchanger was carried out, and then the humidity exchange efficiency of the total heat exchanger after the endurance test for condensation was determined again. If the results showed that the humidity exchange efficiency reduction rate after the endurance test for condensation was less than 10%, the resistance to condensation was determined to be excellent (○). If it was 10% or more, the resistance to condensation was determined to be poor (X) .

The conditions of the first air flow (supply air flow) were set to a temperature of 27°C and relative humidity of 52.7%rh and the conditions of the second air flow (exhaust air flow) were set to a temperature of 35°C and relative humidity of 64.3%rh in the measurements of humidity exchange efficiencies. In addition, the endurance test for condensation of the total heat exchanger was carried out by repeating the steps of immersing the total heat exchanger in water and then drying it several times, which simulated the condensation state.

Results of evaluations on performance of each of the total heat exchangers of Examples 1 to 3 and Comparative examples 1 to 14 are shown in Table 1. Evaluation on resistance to condensation relating to humidity exchange efficiency was not performed for Comparative examples, 1, 3, 5, 6, 7, 9, 11, 12, and 13 which were determined to have poor gas barrier properties of the partition plate.

**[Table 1]**

| | Presence/absence of moisture absorbent | Gas barrier properties of partition plate | Temperature exchange efficiency of total heat exchanger (%) | Humidity exchange efficiency of total heat exchanger (%) | Total heat exchange efficiency of total heat exchanger (%) | Resistance to condensation relating to humidity exchange efficiency | Thickness of fissured layer (µm) | Thickness of nonporous hydrophilic moisture-permeable film (µm) |
|---|---|---|---|---|---|---|---|---|
| Example 1 | Absent | ○ | 76 | 34 | 50 | ○ | 10 | 10 |
| Example 2 | Absent | ○ | 76 | 34 | 50 | ○ | 10 | 10 |
| Example 3 | Absent | ○ | 76 | 34 | 50 | ○ | 10 | 10 |
| Comparative Example 1 | Absent | × | - | - | - | - | 10 | 0.4 |
| Comparative Example 2 | Absent | ○ | 76 | 26 | 46 | ○ | 10 | 50 |
| Comparative Example 3 | Absent | × | - | - | - | - | 0.1 | 10 |
| Comparative Example 4 | Absent | ○ | 75 | 23 | 43 | ○ | 100 | 10 |
| Comparative Example 5 | Absent | × | - | - | - | - | Occurrence of mixing | |
| Comparative Example 6 | Absent | × | - | - | - | - | Occurrence of mixing | |
| Comparative Example 7 | Absent | × | - | - | - | - | 1 | 10 |
| Comparative Example 8 | Absent | ○ | 75 | 14 | 37 | ○ | 100 | 10 |
| Comparative Example 9 | Absent | × | - | - | - | - | 10 | 0.4 |
| Comparative Example 10 | Absent | ○ | 76 | 25 | 45 | ○ | 10 | 50 |
| Comparative Example 11 | Absent | × | - | - | - | - | Occurrence of mixing | |
| Comparative Example 12 | Absent | × | - | - | - | - | Occurrence of mixing | |
| Comparative Example 13 | Absent | × | - | - | - | - | 10 | - |
| Comparative Example 14 | Absent | ○ | 75 | 15 | 38 | ○ | 90 | 10 |

As shown in Table 1, it is clear that the performance of the total heat exchangers of Examples 1 to 3 was excellent in all of the gas barrier properties of the partition plate, each exchange efficiency, and resistance to condensation of the total heat exchanger.

It was determined that Comparative example 1 was poor in gas barrier properties. It is presumed that this was a result of the nonporous hydrophilic moisture-permeable resin film layer having a small thickness of about 0.4 µm, so pinholes were formed in the fissured layer composed of the hydrophilic moisture-permeable resin in which the surface irregularities of the nonwoven fabric were made sufficiently flat and smooth.

Comparative example 2 had low temperature and humidity exchange efficiencies of the total heat exchanger, compared with Examples 1 to 3, which is presumed to be a result of the nonporous hydrophilic moisture-permeable resin film layer having a large thickness of about 50 µm so as to bar temperature and humidity exchanging.

Pinholes were formed in the nonporous hydrophilic moisture-permeable resin film layer and gas barrier properties were determined to be poor in Comparative example 3. It is presumed that this was a result of the fissured layer composed of the hydrophilic moisture-permeable resin having a small thickness of about 0.1 µm, so the surface irregularities on the nonwoven fabric could not be made sufficiently flat and smooth, whereby pinholes were formed in the nonporous hydrophilic moisture-permeable resin film layer. Further, partial peeling between the fissured layer composed of the hydrophilic moisture-permeable resin and the nonwoven fabric layer occurred. It is presumed that this was a result of the fissured layer composed of the hydrophilic moisture-permeable resin having a small thickness of about 0.1 µm so that it could not function sufficiently to anchor the nonporous hydrophilic moisture-permeable resin film layer and the nonwoven fabric layer.

Comparative example 4 had low temperature and humidity exchange efficiencies of the total heat exchanger, compared with Examples 1 to 3. It is presumed that this was a result of an extremely small number of pinholes formed in the fissured layer composed of the hydrophilic moisture-permeable resin. Namely, it is presumed that as the fissured layer composed of the hydrophilic moisture-permeable resin had a large thickness of about 100 µm, the surface irregularities on the nonwoven fabric could be made sufficiently flat and smooth, whereby formation of pinholes in the nonporous hydrophilic moisture-permeable resin film layer could be prevented. On the contrary, it is presumed that the porous state required to improve moisture permeability could not be obtained because the number of pinholes in the fissured layer composed of the hydrophilic moisture-permeable resin formed by cracks generated due to the surface irregularities of the nonwoven fabric was extremely small.

Pinholes were formed in the nonporous hydrophilic moisture-permeable resin film layer and gas barrier properties were determined to be poor in Comparative example 5. It is presumed that this was a result of the softening point of the fissured layer composed of the hydrophilic moisture-permeable resin being higher than that of the nonporous hydrophilic moisture-permeable resin film layer, mixing of the already formed nonporous hydrophilic moisture-permeable resin film layer with the fissured layer composed of the hydrophilic moisture-permeable resin occurred in forming the fissured layer composed of the hydrophilic moisture-permeable resin to provide a substantially single-layered thick polyurethane resin film, whereby cracks were generated in a part corresponding to the nonporous hydrophilic moisture-permeable resin film layer due to the surface irregularities of the nonwoven fabric, so that pinholes were formed.

Pinholes were formed in the nonporous hydrophilic moisture-permeable resin film layer and gas barrier properties were determined to be poor in Comparative example 6. It is presumed that this was a result of the polyurethane resin solution being diluted with dimethylformamide which is a solvent having a high dissolving power in forming the fissured layer composed of the hydrophilic moisture-permeable resin and the nonporous hydrophilic moisture-permeable resin film layer, the nonporous hydrophilic moisture-permeable resin film layer was remelted in dimethylformamide in forming the fissured layer composed of the hydrophilic moisture-permeable resin and mixing of the nonporous hydrophilic moisture-permeable resin film layer with the fissured layer composed of the hydrophilic moisture-permeable resin occurred to provide a substantially single-layered thick polyurethane resin film, whereby cracks were generated in a part corresponding to the nonporous hydrophilic moisture-permeable resin film layer due to the surface irregularities of the nonwoven fabric so that pinholes were formed.

Pinholes were formed in the nonporous hydrophilic moisture-permeable resin film layer and gas barrier properties were determined to be poor in Comparative example 7. It is presumed that this was a result of the fissured layer composed of the hydrophilic moisture-permeable resin having a small thickness of about 1 µm, so the surface irregularities of the nonwoven fabric could not be made sufficiently flat and smooth, whereby cracks were generated in the nonporous hydrophilic moisture-permeable resin film layer by the influence of surface irregularities on the nonwoven fabric via the porous hydrophilic resin film layer in forming the nonporous hydrophilic moisture-permeable resin film layer so that pinholes were formed.

Comparative example 8 had low temperature and humidity exchange efficiencies of the total heat exchanger, compared with Examples 1 to 3. It is presumed that this was a result of an extremely small number of pinholes formed in the fissured layer composed of the hydrophilic moisture-permeable resin. Namely, it is presumed that as the fissured layer composed of the hydrophilic moisture-permeable resin had a large thickness of about 100 µm, the surface irregularities of the nonwoven fabric could be made sufficiently flat and smooth and formation of pinholes in the nonporous hydrophilic moisture-permeable resin film layer could be prevented. On the contrary, it is presumed that the number of pinholes in the fissured layer composed of the hydrophilic moisture-permeable resin formed by cracks generated due to the surface irregularities of the nonwoven fabric was extremely small, and thus the porous state required to improve moisture permeability could not be obtained.

Gas barrier properties were determined to be poor in Comparative example 9. It is presumed that this was a result of the nonporous hydrophilic moisture-permeable resin film layer having a small thickness of about 0.4 µm, pinholes being formed in the first hydrophilic moisture-permeable resin film layer in which the surface irregularities of the nonwoven fabric were made sufficiently flat and smooth.

Comparative example 10 had low temperature and humidity exchange efficiencies of the total heat exchanger, compared with Examples 1 to 3. It is presumed that this was a result of the nonporous hydrophilic moisture-permeable resin film layer having a large thickness of about 50 µm so as to bar temperature and humidity exchanging.

Pinholes were formed in the nonporous hydrophilic moisture-permeable resin film layer and gas barrier properties were determined to be poor in Comparative example 11. It is presumed that this was a result of the softening point of the nonporous hydrophilic moisture-permeable resin film layer being higher than that of the fissured layer composed of the hydrophilic moisture-permeable resin, mixing of the already formed fissured layer composed of the hydrophilic moisture-permeable resin with the nonporous hydrophilic moisture-permeable resin film layer occurred in forming the nonporous hydrophilic moisture-permeable resin film layer to provide a substantially single-layered thick polyurethane resin film, whereby cracks were generated in a part corresponding to the nonporous hydrophilic moisture-permeable resin film layer due to the surface irregularities of the nonwoven fabric and pinholes were formed.

Pinholes were formed in the nonporous hydrophilic moisture-permeable resin film layer and gas barrier properties were determined to be poor in Comparative example 12. It is presumed that this was a result of the polyurethane resin solution being diluted with dimethylformamide which is a solvent having a high dissolving power in forming the fissured layer composed of the hydrophilic moisture-permeable resin and the nonporous hydrophilic moisture-permeable resin film layer, the fissured layer composed of the hydrophilic moisture-permeable resin was remelted in dimethylformamide in forming the nonporous hydrophilic moisture-permeable resin film layer and mixing of the nonporous hydrophilic moisture-permeable resin film layer with the fissured layer composed of the hydrophilic moisture-permeable resin occurred to provide a substantially single-layered thick polyurethane resin film, whereby cracks were generated in a part corresponding to the nonporous hydrophilic moisture-permeable resin film layer due to the surface irregularities of the nonwoven fabric so that pinholes were formed.

Pinholes were formed in the nonporous hydrophilic moisture-permeable resin film layer and gas barrier properties were determined to be poor in Comparative example 13. It is presumed that this was a result of the fissured layer composed of the hydrophilic moisture-permeable resin having a small thickness of about 10 µm, so there was an excessive number of pinholes formed by cracks, whereby a film completely free of pores could not be formed by the surface heat treatment.

Comparative example 14 had low temperature and humidity exchange efficiencies of the total heat exchanger, compared with Examples 1 to 3. It is presumed that this was a result of an extremely small number of pinholes formed in the fissured layer composed of the hydrophilic moisture-permeable resin. Namely, it is presumed that as the fissured layer composed of the hydrophilic moisture-permeable resin had a large thickness of about 90 µm, the surface irregularities of the nonwoven fabric could be made sufficiently flat and smooth, whereby formation of pinholes in the nonporous hydrophilic moisture-permeable resin film layer could be prevented. On the contrary, it is presumed that as the number of pinholes formed in the fissured layer composed of the hydrophilic moisture-permeable resin due to the surface irregularities of the nonwoven fabric was extremely small, the porous state required to improve the moisture permeability could not be obtained.

### Explanation on Numerals

1. Total heat exchanger, 2. Supply air flow layer, 3. Exhaust air flow layer, 4. Partition plate, 5. Supply air flow passage, 6. Exhaust air flow passage, 7. Spacing plate, 8, Release base material, 9. Nonporous hydrophilic moisture-permeable resin film layer, 10. Undried coating film, 11. Porous resin base material layer, 12. Fissured layer composed of a hydrophilic moisture-permeable resin

## Claims

1. A total heat exchanger (1) which facilitates circulation of two types of air currents separated by a partition plate (4) and conducts heat exchange of sensible heat and latent heat of the two types of air currents across the partition plate (4),
wherein the partition plate has a porous resin base material layer (11), a fissured layer (12) having a thickness of 2 µm or more and 50 µm or less and composed of a hydrophilic moisture-permeable resin, and a nonporous hydrophilic moisture-permeable resin film layer (9) having a thickness of 0.5 µm or more and 10 µm or less laminated in this order, and the cracks of the fissured layer (12) are spontaneously formed by utilizing the surface irregularities of the porous resin base material layer (11) when laminating an undried coating film (10) of a hydrophilic moisture-permeable resin solution on the porous resin base material layer (11) and drying same.

2. The total heat exchanger (1) according to claim 1, wherein at least one of the fissured layers (12) composed of the hydrophilic moisture-permeable resin and the nonporous hydrophilic moisture-permeable resin film layer (9) is composed of polyurethane.

3. The total heat exchanger (1) according to claim 1 or 2, wherein the porous resin base material layer (11) is composed of a nonwoven fabric.

4. A method for producing a partition plate (4) for a total heat exchanger (1) according to claim 1, having a porous resin base material layer (11), a fissured layer (12) having a thickness of 2 µm or more and 50 µm or less and composed of a hydrophilic moisture-permeable resin, and a nonporous hydrophilic moisture-permeable resin film layer (9) having a thickness of 0.5 µm or more and 10 µm or less laminated in this order,
wherein the method comprises the steps of coating a hydrophilic moisture-permeable resin solution on the nonporous hydrophilic moisture-permeable resin film layer (9) to form an undried coating film (10), laminating the undried coating film (10) on the porous resin base material layer (11), and drying same to form cracks in the coating film to form the fissured layer (12).

5. A method for producing a partition plate (4) for a total heat exchanger (1) according to claim 1, having a porous resin base material layer (11), a fissured layer (12) having a thickness of 2 µm or more and 50 µm or less and composed of a hydrophilic moisture-permeable resin, and a nonporous hydrophilic moisture-permeable resin film layer (9) having a thickness of 0.5 µm or more and 10 µm or less laminated in this order,
wherein the method comprises the steps of coating a hydrophilic moisture-permeable resin solution on a release base material (8) to form an undried coating film (10), laminating the undried coating film (10) on the porous resin base material layer (11), drying same to form cracks in the coating film to form the fissured layer (12), and then removing the release base material (8) and the steps of coating a hydrophilic moisture-permeable resin solution on a release base material (8) to form an undried coating film (10), laminating the undried coating film (10) on the fissured layer (12), and drying same to form the nonporous hydrophilic moisture-permeable resin film layer (9).

6. A method for producing a partition plate (4) for a total heat exchanger (1) according to claim 1, having a porous resin base material layer (11), a fissured layer (12) having a thickness of 2 µm or more and 50 µm or less and composed of a hydrophilic moisture-permeable resin, and a nonporous hydrophilic moisture-permeable resin film layer (9) having a thickness of 0.5 µm or more and 10 µm or less laminated in this order,
wherein the method comprises the steps of coating a hydrophilic moisture-permeable resin solution on a release base material (8) to form an undried coating film (10), laminating the undried coating film (10) on the porous resin base material layer (11), drying same to form cracks in the coating film to form the fissured layer (12), and then removing the release base material (8) and the steps of subjecting the surface of the fissured layer (12) to heat treatment at a temperature of a softening point of the hydrophilic moisture-permeable resin or higher to seal the cracks on the surface to form the nonporous hydrophilic moisture-permeable resin film layer (9).

## Patentansprüche

1. Gesamtwärmetauscher (1), welcher Zirkulation von zwei Typen von Luftströmen, die durch eine Trennplatte (4) getrennt sind, ermöglicht und Wärmeaustausch von fühlbarer Wärme und latenter Wärme der zwei Typen von Luftströmen über die Trennplatte (4) durchführt,
wobei die Trennplatte eine Poröse-Harz-Basismaterialschicht (11), eine zerklüftete Schicht (12), aufweisend eine Dicke von 2 µm oder mehr und 50 µm oder weniger und gebildet aus einem hydrophilen feuchtigkeitsdurchlässigen Harz, und eine nicht-poröse hydrophile feuchtigkeitsdurchlässige Harzfilmschicht (9), aufweisend eine Dicke von 0,5 µm oder mehr und 10 µm oder weniger, laminiert in dieser Reihenfolge aufweist, und die Risse der zerklüfteten Schicht (12) spontan gebildet werden unter Ausnutzung der Oberflächenunregelmäßigkeiten der Porösen-Harz-Basismaterialschicht (11) beim Auflaminieren eines nicht-getrockneten Beschichtungsfilms (10) von einer hydrophilen feuchtigkeitsdurchlässigen Harzlösung auf die Poröse-Harz-Basismaterialschicht (11) und Trocknen derselben.

2. Gesamtwärmetauscher (1) nach Anspruch 1, wobei mindestens eine von den aus dem hydrophilen feuchtigkeitsdurchlässigen Harz gebildeten zerklüfteten Schichten (12) und der nicht-porösen hydrophilen feuchtigkeitsdurchlässigen Harzfilmschicht (9) aus Polyurethan gebildet ist.

3. Gesamtwärmetauscher (1) nach Anspruch 1 oder 2, wobei die Poröse-Harz-Basismaterialschicht (11) aus einem nicht gewebten Stoff zusammengesetzt ist.

4. Verfahren zur Herstellung einer Trennplatte (4) für einen Gesamtwärmetauscher (1) nach Anspruch 1,
aufweisend eine Poröse-Harz-Basismaterialschicht (11), eine zerklüftete Schicht (12), aufweisend eine Dicke von 2 µm oder mehr und 50 µm oder weniger und gebildet aus einem hydrophilen feuchtigkeitsdurchlässigen Harz, und eine nicht-poröse hydrophile feuchtigkeitsdurchlässige Harzfilmschicht (9), aufweisend eine Dicke von 0,5 µm oder mehr und 10 µm oder weniger, laminiert in dieser Reihenfolge,
wobei das Verfahren die Schritte des Auftragens einer hydrophilen feuchtigkeitsdurchlässigen Harzlösung auf die nicht-poröse hydrophile feuchtigkeitsdurchlässige Harzfilmschicht (9), so dass ein nichtgetrockneter Beschichtungsfilm (10) gebildet wird, Laminierens des nicht-getrockneten Beschichtungsfilms (10) auf die Poröse-Harz-Basismaterialschicht (11), und Trocknens derselben umfasst, um im Beschichtungsfilm Risse zu bilden, um die zerklüftete Schicht (12) zu bilden.

5. Verfahren zur Herstellung einer Trennplatte (4) für einen Gesamtwärmetauscher (1) nach Anspruch 1,
aufweisend eine Poröse-Harz-Basismaterialschicht (11), eine zerklüftete Schicht (12), aufweisend eine Dicke von 2 µm oder mehr und 50 µm oder weniger und gebildet aus einem hydrophilen feuchtigkeitsdurchlässigen Harz, und eine nicht-poröse hydrophile feuchtigkeitsdurchlässige Harzfilmschicht (9), aufweisend eine Dicke von 0,5 µm oder mehr und 10 µm oder weniger, laminiert in dieser Reihenfolge,
wobei das Verfahren die Schritte des Auftragens einer hydrophilen feuchtigkeitsdurchlässigen Harzlösung auf ein Ablösungs-Basismaterial (8), um einen nicht-getrockneten Beschichtungsfilm (10) zu bilden, Laminierens des nicht-getrockneten Beschichtungsfilms (10) auf die Poröse-Harz-Basismaterialschicht (11), Trocknens desselben, um im Beschichtungsfilm Risse zu bilden, um die zerklüftete Schicht (12) zu bilden, und dann Entfernens des Ablösungs-Basismaterials (8), und die Schritte des Auftragens einer hydrophilen feuchtigkeitsdurchlässigen Harzlösung auf ein Ablösungs-Basismaterial (8), um einen nicht-getrockneten Beschichtungsfilm (10) zu bilden, Laminierens des nicht-getrockneten Beschichtungsfilms (10) auf die zerklüftete Schicht (12) und Trocknens derselben umfasst, um die nicht-poröse hydrophile feuchtigkeitsdurchlässige Harzfilmschicht (9) zu bilden.

6. Verfahren zur Herstellung einer Trennplatte (4) für einen Gesamtwärmetauscher (1) nach Anspruch 1,
aufweisend eine Poröse-Harz-Basismaterialschicht (11), eine zerklüftete Schicht (12), aufweisend eine Dicke von 2 µm oder mehr und 50 µm oder weniger und gebildet aus einem hydrophilen feuchtigkeitsdurchlässigen Harz, und eine nicht-poröse hydrophile feuchtigkeitsdurchlässige Harzfilmschicht (9), aufweisend eine Dicke von 0,5 µm oder mehr und 10 µm oder weniger, laminiert in dieser Reihenfolge,
wobei das Verfahren die Schritte des Auftragens einer hydrophilen feuchtigkeitsdurchlässigen Harzlösung auf ein Ablösungs-Basismaterial (8), um einen nicht-getrockneten Beschichtungsfilm (10) zu bilden, Laminierens des nicht-getrockneten Beschichtungsfilms (10) auf die Poröse-Harz-Basismaterialschicht (11), Trocknens derselben, um im Beschichtungsfilm Risse zu bilden, um die zerklüftete Schicht (12) zu bilden, und dann Entfernens des Ablösungs-Basismaterials (8) und der Schritte des Unterziehens der Oberfläche der zerklüfteten Schicht (12) einer Wärmebehandlung bei einer Temperatur eines Erweichungspunktes des hydrophilen feuchtigkeitsdurchlässigen Harzes oder höher, um die Risse auf der Oberfläche zu versiegeln, um die nicht-poröse hydrophile feuchtigkeitsdurchlässige Harzfilmschicht (9) zu bilden.

## Revendications

1. Echangeur de chaleur totale (1) qui facilite la circulation de deux types de courants d'air séparés par une plaque de séparation (4) et effectue un échange de chaleur de la chaleur sensible et de la chaleur latente des deux types de courants d'air à travers la plaque de séparation (4),
dans lequel la plaque de séparation a une couche de matériau de base en résine poreuse (11), une couche fissurée (12) ayant une épaisseur de 2 µm ou plus et de 50 µm ou moins et composée d'une résine perméable à l'humidité hydrophile, et une couche de film en résine perméable à l'humidité hydrophile non poreuse (9) ayant une épaisseur de 0,5 µm ou plus et de 10 µm ou moins, stratifiées dans cet ordre, et les fissures de la couche fissurée (12) sont formées spontanément par utilisation des irrégularités de surface de la couche de matériau de base en résine poreuse (11) lors de la stratification d'un film de revêtement non séché (10) d'une solution de résine perméable à l'humidité hydrophile sur la couche de matériau de base en résine poreuse (11) et séchage de celui-ci.

2. Echangeur de chaleur totale (1) selon la revendication 1, dans lequel au moins l'une des couches fissurées (12) composée de la résine perméable à l'humidité hydrophile et de la couche de film de résine perméable à l'humidité hydrophile non poreuse (9) est composée de polyuréthane.

3. Echangeur de chaleur totale (1) selon la revendication 1 ou 2, dans lequel la couche de matériau de base en résine poreuse (11) est composée d'une étoffe non tissée.

4. Procédé pour produire une plaque de séparation (4) pour un échangeur de chaleur totale (1) selon la revendication 1,
ayant une couche de matériau de base en résine poreuse (11), une couche fissurée (12) ayant une épaisseur de 2 µm ou plus et de 50 µm ou moins et composée d'une résine perméable à l'humidité hydrophile, et une couche de film en résine perméable à l'humidité hydrophile non poreuse (9) ayant une épaisseur de 0,5 µm ou plus et de 10 µm ou moins, stratifiées dans cet ordre,
lequel procédé comprend les étapes de déposition sous forme de revêtement d'une solution de résine perméable à l'humidité hydrophile sur la couche de film de résine perméable à l'humidité hydrophile non poreuse (9) pour former un film de revêtement non séché (10), de stratification du film de revêtement non séché (10) sur la couche de matériau de base en résine poreuse (11), et de séchage de celui-ci pour former des fissures dans le film de revêtement afin de former la couche fissurée (12).

5. Procédé pour produire une plaque de séparation (4) pour un échangeur de chaleur totale (1) selon la revendication 1,
ayant une couche de matériau de base en résine poreuse (11), une couche fissurée (12) ayant une épaisseur de 2 µm ou plus et de 50 µm ou moins et composée d'une résine perméable à l'humidité hydrophile, et une couche de film en résine perméable à l'humidité hydrophile non poreuse (9) ayant une épaisseur de 0,5 µm ou plus et de 10 µm ou moins, stratifiées dans cet ordre,
lequel procédé comprend les étapes de déposition sous forme de revêtement d'une solution de résine perméable à l'humidité hydrophile sur un matériau de base antiadhésif (8) pour former un film de revêtement non séché (10), de stratification du film de revêtement non séché (10) sur la couche de matériau de base en résine poreuse (11), de séchage de celui-ci pour former des fissures dans le film de revêtement afin de former la couche fissurée (12), et ensuite de retrait du matériau de base antiadhésif (8), et les étapes de déposition sous forme de revêtement d'une solution de résine perméable à l'humidité hydrophile sur un matériau de base antiadhésif (8) pour former un film de revêtement non séché (10), de stratification du film de revêtement non séché (10) sur la couche fissurée (12), et de séchage de celui-ci pour former la couche de film de résine perméable à l'humidité hydrophile non poreuse (9).

6. Procédé pour produire une plaque de séparation (4) pour un échangeur de chaleur totale (1) selon la revendication 1,
ayant une couche de matériau de base en résine poreuse (11), une couche fissurée (12) ayant une épaisseur de 2 µm ou plus et de 50 µm ou moins et composée d'une résine perméable à l'humidité hydrophile, et une couche de film en résine perméable à l'humidité hydrophile non poreuse (9) ayant une épaisseur de 0,5 µm ou plus et de 10 µm ou moins, stratifiées dans cet ordre,
lequel procédé comprend les étapes de déposition sous forme de revêtement d'une solution de résine perméable à l'humidité hydrophile sur un matériau de base antiadhésif (8) pour former un film de revêtement non séché (10), de stratification du film de revêtement non séché (10) sur la couche de matériau de base en résine poreuse (11), de séchage de celui-ci pour former des fissures dans le film de revêtement afin de former la couche fissurée (12), et ensuite de retrait du matériau de base antiadhésif (8), et les étapes de soumission de la surface de la couche fissurée (12) à un traitement thermique à une température égale ou supérieure au point de ramollissement de la résine perméable à l'humidité hydrophile pour sceller les fissures sur la surface afin de former la couche de film de résine perméable à l'humidité hydrophile non poreuse (9).
